# EUROPEAN PATENT APPLICATION

(11) **EP 1 310 882 A2**
(43) Date of publication of application: **14.05.2003**
(21) Application number: 02102538.2
(22) Date of filing: 05.11.2002
(51) Int. Cl.: G06F 17/27, G06F 11/36

(54) **Method and Apparatus for Testing Embedded Examples in Documentation**

(30) Priority: 06.11.2001 US 993578
(71) Applicant: Sun Microsystems, Inc., Santa Clara, California 95054 (US)
(72) Inventor: Polk, George Allyn, 94043, Mountain View (US)
(74) Representative: Weihs, Bruno

(57) **Abstract**

A method of testing an embedded example includes extracting the embedded example from documentation, creating a test suite from the embedded example, selecting a tool against which to execute the test suite, executing the test suite against the tool to generate an output response, and comparing the output response of the tool to a golden file.

## Description

### Background of the Invention

Documentation associated with a tool (*e.g.*, operating system, debugging tool, web applications, applets, custom software applications, etc.) can take multiple forms. Common forms of documentation include electronic reference texts, on-line help files, man pages, reference manuals, comments within source code, etc. Documentation may come in a variety of forms, such as computer files, which may be accessible through a web browser, editor, etc., or documentation may be in hard copy form, such as a book or technical manual. Documentation may help explain a particular source code statement, a particular tool command or functionality, or provide insight into how the source code statement or tool command functions.

For example, if a source code statement in a retail sales software application takes the form of "Let Name equal 'John'," the associated documentation may explain the source code statement as, "Name refers to the name of the customer." As another example, an example in a technical manual may instruct the user to type a command, such as "loadfile x.y." The "loadfile x.y" command is directed at a tool. The tool may then take some action based on the command, such as displaying the contents of the file on a computer monitor. The example in the documentation may explain how the loadfile command works and what the expected output of the tool is when the user types the loadfile command at a command line interface.

Examples in documentation may offer alternatives for tool commands or source code statements. For example, documentation adjacent to a tool command "loadfile x.y" located in the documentation may offer an example of an alternative version of the tool command. Such documentation may read as, "Another version of this source code statement is 'showfile x.y'." Documentation may be read by end users of the tool or consumers of the tool. The documentation may be read in order to gain insight into, or an understanding of, the tool. Documentation may also be used by software engineers or technical writers involved in the creation, maintenance, and/or revision of tools.

Examples within documentation may often contain errors. The errors that are present in the examples may exist for a variety of reasons. Some possible reasons include tool commands or source code statements being written improperly, a change in the version of the tool, or a change in a system or a network configuration, etc. These errors often result in frustrating the user of the documentation.

To reduce the number of errors within examples in the documentation, several standard tools are used. One tool is a test suite, which is a collection of one or more tests used to determine whether a tool is functioning as specified. A test used within the test suite typically contains one or more inputs to the tool to be tested, designed to exercise one or more of the tool's features. A related testing tool is a test harness, which uses a test suite to test the operation of another by accessing the test suite and applying the tests to the tool being tested. The test harness typically evaluates the response of the tool being tested to determine if the tool is working properly. Another tool used in testing is a golden file. The golden file typically contains a pre-determined proper response for an embedded example). The golden file may be created by various means. For example, a test engineer may manually create the golden file by storing in a computer file the correct response for the embedded example. The golden file may also be created by using a tag pair to indicate the correct response contained within an example in the documentation.

A language that may be used to create a tag pair is Extensible Markup Language (XML). XML is a language that allows for the assigning of a definition to one or more words in a document. XML uses tags to assign a definition. In order to assign a definition to a phrase in a document, a start tag is placed at the beginning of the phrase, and a closing tag is placed at the end of the phrase. The combination of a start tag and a closing tag is commonly referred to as a tag pair. For example, if the phrase "John Smith" exists in a document, in order to define "John Smith" as the name of a customer, a tag pair is used. An appropriate start tag is placed before "John Smith", and an appropriate closing tag is placed after "John Smith". Using XML, this particular example would appear as <customer name>John Smith</customer name>. A word or a group of words located between the tag pair is called an element.

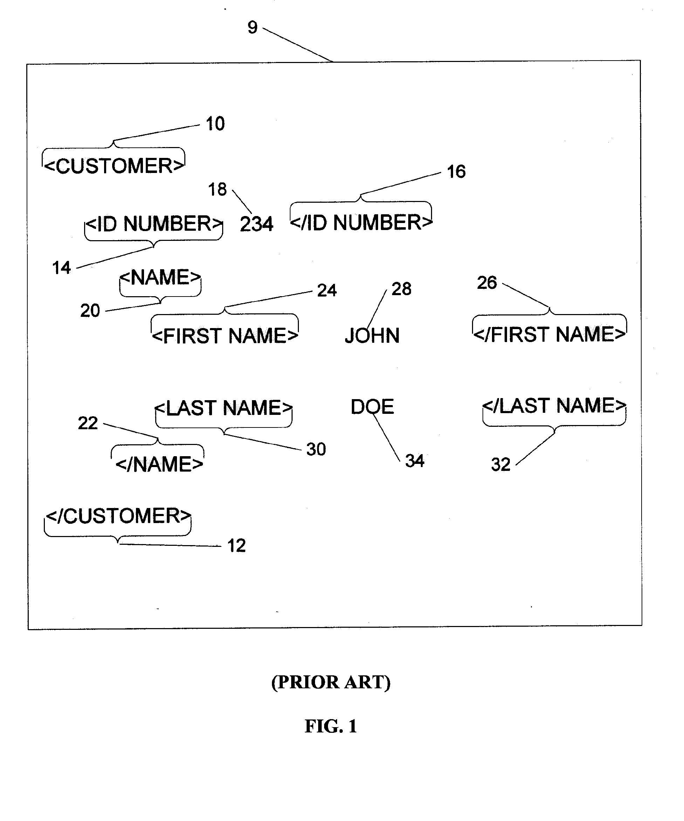

Tag pairs may be nested within other tag pairs. For example, Figure 1 shows a document (9), which could be part of documentation that explains the operation of a tool. The view represented in Figure 1 is one seen by a creator of the document. An outer tag pair is represented by a start tag (10) and a closing tag (12), which define a CUSTOMER. The outer tag pair which defines a CUSTOMER includes two nested tag pairs. A first tag pair defines an ID NUMBER for the CUSTOMER, with a start tag (14), a closing tag (16), and an element (18), which represents the value of the ID NUMBER. In this example, the ID NUMBER for the CUSTOMER is 234. A second tag pair defines a NAME, with a start tag (20), a closing tag (22), and includes two nested tag pairs. A first nested tag pair of the second tag pair defines a FIRST NAME for the CUSTOMER, with a start tag (24), a closing tag (26), and an element (28), which represents the value of the FIRST NAME. In this example, the FIRST NAME for the CUSTOMER is "John." A second nested tag pair of the second tag pair defines a LAST NAME for the CUSTOMER, with a start tag (30), a closing tag (32), and an element (34), which represents the value of the LAST NAME. In this example, the LAST NAME for the CUSTOMER is "Doe."

When a user of a tool reads documentation associated with the tool, the user expects that the examples in the documentation are proper, *i.e*., examples, when executed as part of a tool, perform as expected or as shown in the documentation. Occasionally, when the user attempts to utilize examples described in the documentation on the specified tool, the output of the tool may not be proper because of errors (in the example or the tool). These errors may be caused by a variety of reasons, including errors associated with the creation, design, publishing, maintenance, etc. of the examples. The errors may also arise in the construction or design of the tool. Such errors are difficult to determine and can provide a user of the documentation, *e.g.*, software engineer or software tester, much frustration. Therefore, a desirable goal is to at least determine the source of errors in examples in documentation, and potentially correct errors in documentation, in a quick and efficient manner.

### Summary of Invention

In general, in one aspect, the invention relates to a method of testing an embedded example. The method comprises extracting the embedded example from documentation, creating a test suite from the embedded example, selecting a tool against which to execute the test suite; executing the test suite against the tool to generate an output response, and comparing the output response of the tool to a golden file.

In general, in one aspect, the invention relates to a method of testing an embedded example. The method comprises extracting the embedded example from documentation, creating a test suite from the embedded example, selecting a tool against which to execute the test suite; executing the test suite against the tool to generate an output response, comparing the output response of the tool to a golden file, creating the embedded example using at least one tag chosen from a tag set, creating the golden file using at least one tag chosen from a tag set, locating a source of error if the output response of the tool varies from the golden file, correcting the embedded example if the output response of the tool varies from the golden file, sending a comparison result to a display device, and storing a comparison result onto a storage device.

In general, in one aspect, the invention relates to a method of embedding tags. The method comprises locating an embedded example in documentation and delineating the embedded example with a start tag and a closing tag chosen from a tag set.

In general, in one aspect, the invention relates to a method of embedding tags. The method comprises locating an embedded example in documentation, delineating the embedded example with a start tag and a closing tag chosen from a tag set, embedding a control statement as part of the embedded example, and embedding a file location statement as part of the embedded example.

In general, in one aspect, the invention relates to a method of creating a test suite. The method comprises examining an extracted example, interpreting a tag located within the extracted example, and aggregating constituent parts using the interpretation of the tag.

In general, in one aspect, the invention relates to a computer system to test an embedded example. The computer system comprises a processor, a memory, a storage device, a computer display, and software instructions stored in the memory for enabling the computer system under control of the processor. The software instructions perform extracting the embedded example from documentation, creating a test suite from the embedded example, selecting a tool against which to execute the test suite, executing the test suite against the tool to generate an output response, and comparing the output response of the tool to a golden file.

In general, in one aspect, the invention relates to a computer system to test an embedded example. The computer system comprises a processor, a memory, a storage device, a computer display, and software instructions stored in the memory for enabling the computer system under control of the processor. The software instructions perform extracting the embedded example from documentation, creating a test suite from the embedded example, selecting a tool against which to execute the test suite, executing the test suite against the tool to generate an output response, and comparing the output response of the tool to a golden file, creating the embedded example using at least one tag chosen from a tag set, creating the golden file using at least one tag chosen from a tag set, locating a source of error if the output response of the tool varies from the golden file, correcting the embedded example if the output response of the tool varies from the golden file, sending a comparison result to a display device, and storing a comparison result onto a storage device.

In general, in one aspect, the invention relates to an apparatus for testing an embedded example. The computer system comprises means for extracting the embedded example from documentation, means for creating a test suite from the embedded example, means for selecting a tool against which to execute the test suite, means for executing the test suite against the tool to generate an output response, and means for comparing the output response of the tool to a golden file.

Other aspects and advantages of the invention will be apparent from the following description and the appended claims.

### Brief Description of Drawings

Figure 1 shows an example of part of an XML document.

Figure 2 shows an example of a networked computer.

Figure 3, in accordance with one or more embodiments of the present invention, shows an Embedded Example Extraction and Testing Module interacting with other entities.

Figure 4, in accordance with one or more embodiments of the present invention, shows an Embedded Example Extraction and Testing Module.

Figure 5, in accordance with one or more embodiments of the present invention, shows a sequence of operations to test embedded examples in documentation.

Figure 6, in accordance with one or more embodiments of the present invention, shows a process to create an embedded example using tags.

### Detailed Description

Exemplary embodiments of the invention will be described with reference to the accompanying drawings. Like items in the drawings are shown with the same reference numbers.

In the following detailed description of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

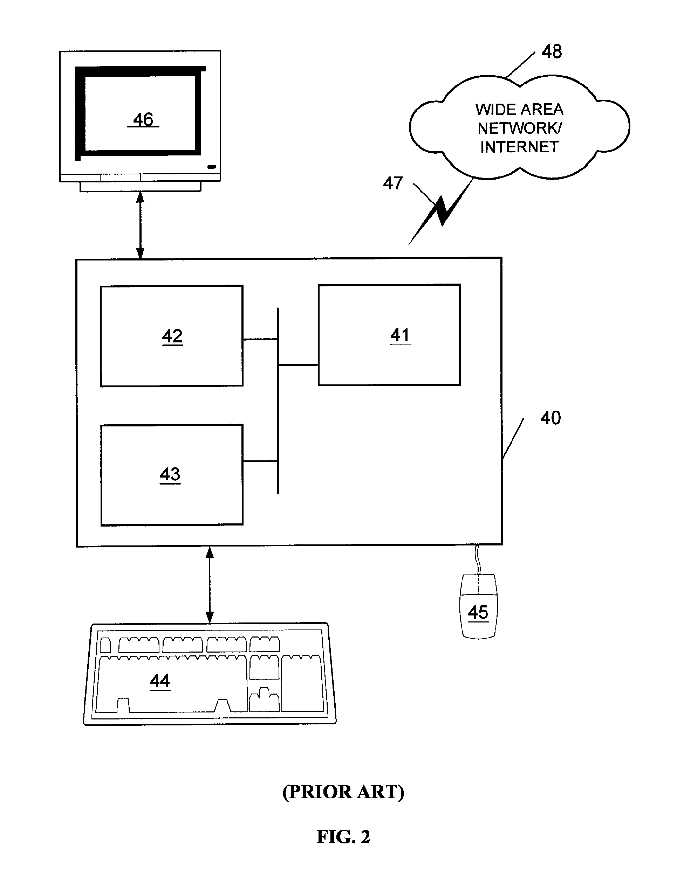

The present invention may be implemented on virtually any type computer regardless of the platform being used. For example, as shown in Figure 2, a typical computer (40) includes a processor (41), associated memory (42), a storage device (43), and numerous other elements and functionalities typical of today's computers (not shown). The computer (40) may also include input means, such as a keyboard (44) and a mouse (45), and an output device, such as a monitor (46). Those skilled in the art will appreciate that these input and output means may take other forms in an accessible environment. The computer (40) is connected via a network connection (47) to a Wide Area Network (WAN) (48), such as the Internet.

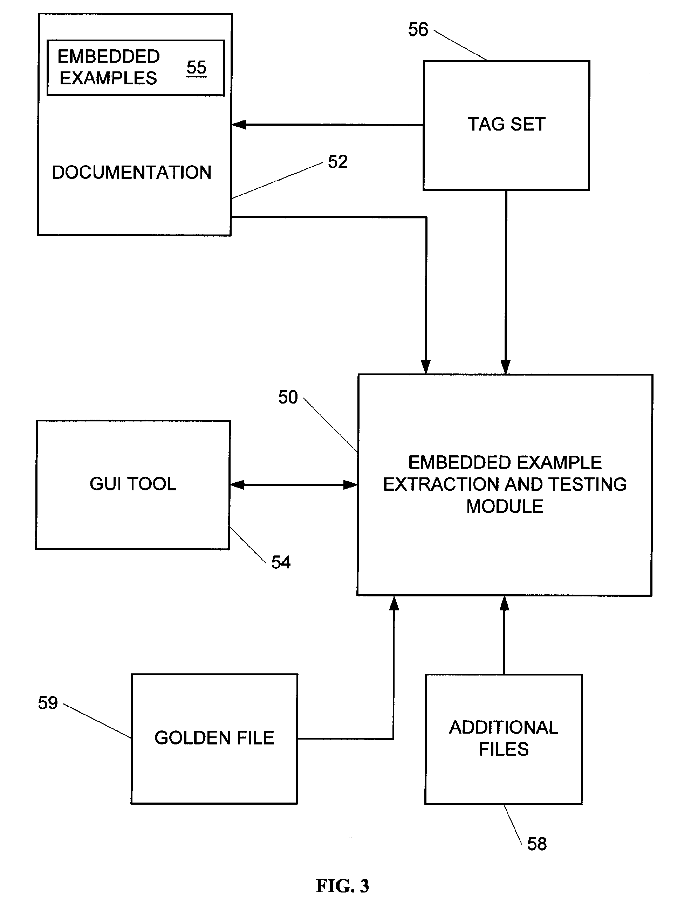

The present invention involves analyzing and testing embedded examples in documentation using a module, such as an Embedded Example Extraction and Testing Module (EEETM), operating in conjunction with a number of other entities described below. Referring to Figure 3, the EEETM (50) may access documentation (52) that provides an explanation about the operation of a tool (54) for a user. The tool (54) may be an operating system, a debugging tool, a web application, an applet, or custom software applications. One skilled in the art can appreciate that the tool may be of various forms and should not be limited to the aforementioned examples. Embedded examples (55) within the documentation (52) may use tool commands, source code statements, expected output of the tool, etc., to help demonstrate the functionality of the tool.

Tags which are similar to XML tags, may be embedded into the documentation (52) in order to delineate examples. An embedded example is an example (55) that has been delineated by tags. The tags may be embedded into the documentation (52) by a group of technical writers or software quality engineers. The tags embedded in the documentation (52) are chosen from a tag set (56). The tag set (56) contains numerous pairs of start and closing tags and is typically created by technical writers, software quality engineers, etc.

The embedded example (55) may be extracted from the documentation (52) using tags from the tag set (56) as a guide to the location and meaning of the embedded example (55). An embedded example (55) that has been extracted from the documentation is considered an extracted example. The test suite is created using information extracted from the documentation (52). Tags in an embedded example (55) may access additional files (58) in the course of creating the test suite in order to put the extracted example (55) in the correct form to be executed against a selected tool (54).

The test suite is executed against the tool (54) in order to determine whether embedded examples (55) in the documentation (52) work properly. The tool (54) responds to the test suite by generating an output response. The output response is evaluated to determine if a proper output response is generated by comparing the output response generated by the tool (54) with the contents of a golden file (59), *i.e*. a pre-determined, proper output of the tool (54).

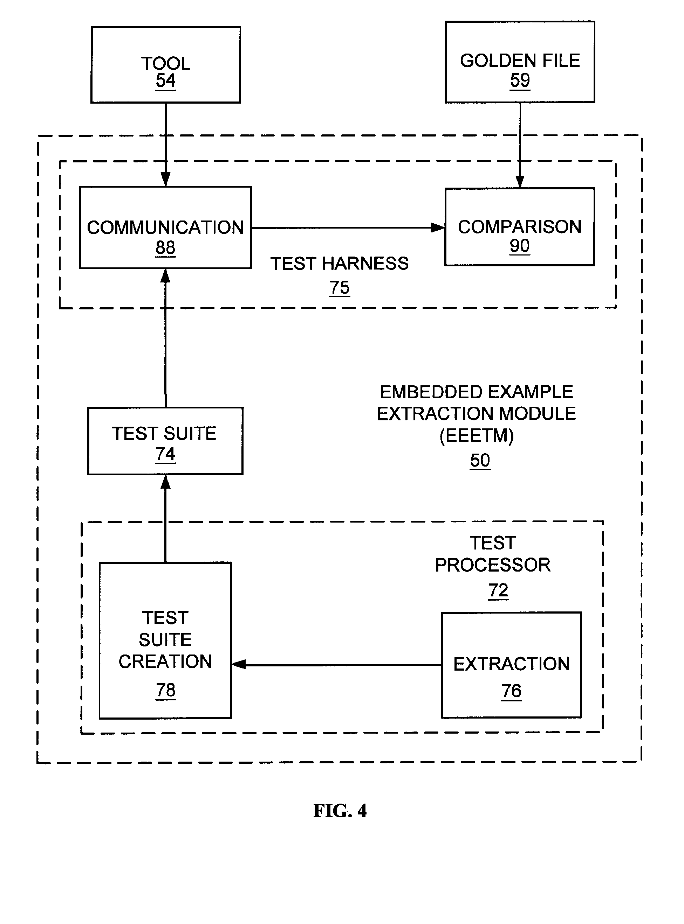

Referring to Figure 4, in accordance with one or more embodiments of the present invention, the EEETM (50) includes a test processor (72), a test suite (74), and a test harness (75).

The test processor (72) contains an extraction component (76) and a test suite creation component (78). The test processor (72) extracts embedded examples (55 in Figure 3) from the documentation (52 in Figure 3) to be used in the creation of the test suite (74). Specifically, the extraction component (76) may interpret embedded tags chosen from a tag set in order to distinguish embedded examples (55 in Figure 3) from the rest of the documentation (52 in Figure 3). The test suite creation component (78) may use portions of the embedded example (55 in Figure 3) to complete the creation of the test suite (74). The test suite creation component (78) may also use portions of one or more additional files (58 in Figure 3).

The test harness (75) includes a communication component (88) and a comparison component (90). The test harness (75) accesses the test suite (74) created by the test processor (72) using the communication component (88). The test harness (75) may also establish communication with the tool (54 in Figure 3) using the communication component (88). Additionally, the test harness (75) executes the test suite (74) against the tool (54 in Figure 3), and uses the comparison component (90) to compare an output response of the tool (54 in Figure 3) with the proper response to the embedded examples (55 in Figure 3). The test harness (75) typically accesses the golden file (59 in Figure 3) in order to determine the proper output response of the tool (54 in Figure 3). In accordance with one or more embodiments of the present invention, a test suite (74) is created to be compatible with one or more already existing test harnesses, such as any commercially available test harnesses, which are external to the EEETM (50 in Figure 3).

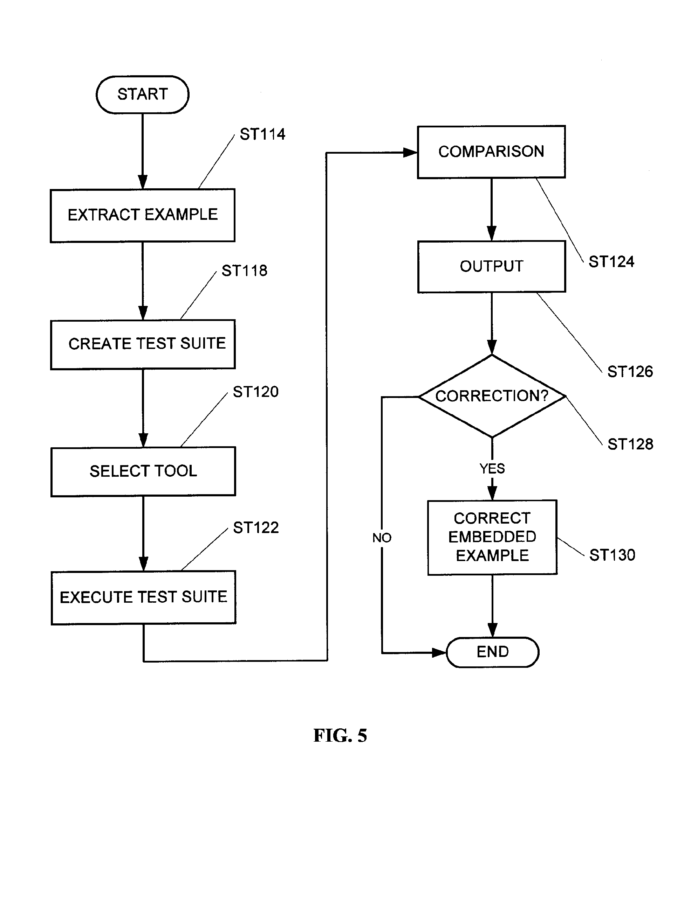

Figure 5 illustrates a sequence of operations for testing an embedded example in documentation in accordance with one or more embodiments of the present invention. To begin, an embedded example is extracted from the documentation (Step 114). An extraction component accesses the documentation and uses tags embedded in the documentation in order to extract the embedded example from the documentation. A more detailed discussion of the process to embed tags in an example within documentation is provided below.

Next, a test suite is created (Step 118). To create the test suite, a tag within the extracted example is examined and interpreted using the tag set. The tag set is accessed in order to determine how to interpret the tag. For example, a start tag in the extracted example may read as "<test-output>," which may define that part of the extracted example as an expected output response of a tool. Associated with the tag set may be additional information to assist the test suite creation component with interpreting the tag. In accordance with one or more implementations of the present invention, a lookup table may be associated with the tag set that is consulted in order to interpret a tag found in an extracted example. Upon completion of interpreting the tags, a test suite is created. Often, the tool commands, source code statements, expected tool outputs, etc., in extracted examples cannot execute without additional resources and code statements. Therefore, a test suite can be an aggregation of constituent parts, such as source code statements from the extracted examples and other source code statements not found in the extracted examples.

Next, a tool is selected (Step 120). The tool may be selected using a variety of different ways. One example is using the name and location of the tool that is included in the embedded example with the documentation.

Next, a test suite is executed (Step 122). The test suite is executed by a test harness. The test harness may interact with the tool via a communication component. For example, the communication component may communicate with the tool using an operating system which controls the computer on which the tool operates. This communication may be facilitated by, for example, sending messages to the tool that act as instructions, which the tool may act upon. The test harness executes tests from the test suite against the tool. The tests include instructions to the tool.

Next, an output response of the tool is compared to the golden file by a comparison component (Step 124). For example, if the golden file shows that the proper response to the test is "Hello," and there is no output response generated by the tool to the test unit, then the tool may not function properly for the embedded example which is used to create the test.

Next, output concerning the results of the test may be generated (Step 126). Data is sent to an output and/or storage device, such as a monitor, a printer, a file, etc. Next, a determination is made as to whether corrections of the embedded examples are necessary and/or appropriate (Step 128). In some circumstances, embedded examples may be located and corrected in the documentation. For example, an embedded example may be corrected by using a reference document, such as a specifications guide, which is linked to the documentation. The specifications guide is one or more documents created during development of a tool. The specifications guide is typically used by a team of software engineers to build the tool. The specifications guide includes criteria for the proper operation of the tool, and contains information relating to what the tool is expected to be able to do when development of the tool is finished and ready to ship to the end user. If the specifications guide is prepared so that an EEETM can access and link to the specifications guide, then the specifications guide may be accessed and used to correct the embedded example. Next, if appropriate, embedded examples within the documentation and/or a defective tool are corrected (Step 130).

Those skilled in the art will appreciate that the number of steps described above may be greater or fewer in number, or the steps may occur in a different sequence than shown above. For example, the execution of the test suite may occur in a different time frame from the creation of the test suite. Often, the test suite is executed whenever the tool or its operational environment changes. A new test suite is often created whenever the documentation is changed.

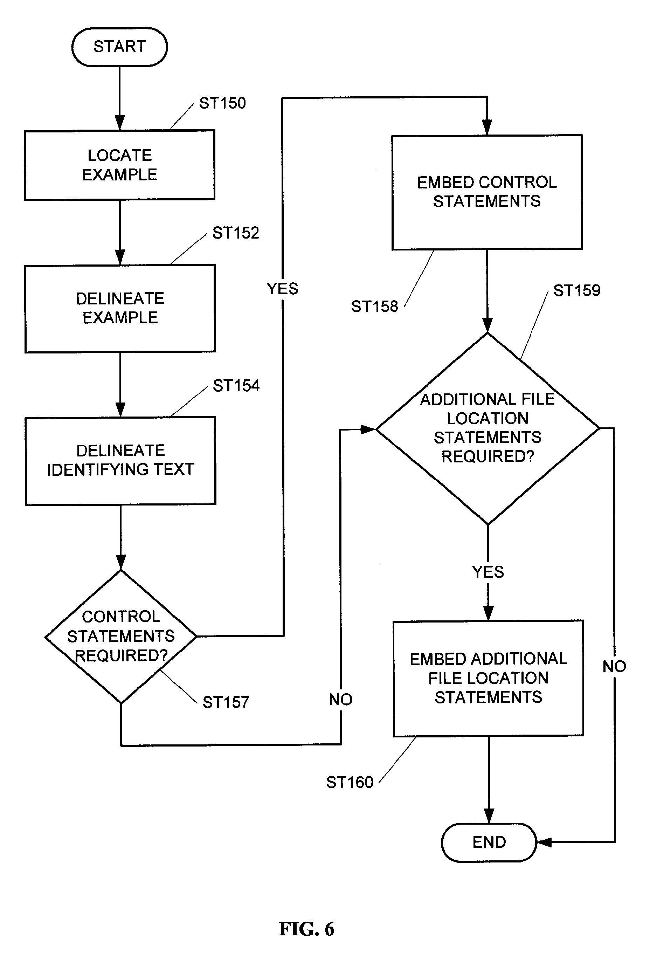

A more detailed explanation of the process to embed tags to an example is represented in flowchart form in accordance with one or more embodiments of the present invention in Figure 6. An example within the documentation is chosen (Step 150). Next, the example is delineated by embedding a start tag and a closing tag chosen from a tag set similar to XML (Step 152).

Next, any identifying text that marks the example is delineated (Step 154). One example of identifying text is certain structural conventions used to tell the test processor the context of an example within a given chapter or section of the documentation, *e.g.* the example may relate to a previous example in the chapter or section. An example in documentation may read as, "If the user wishes to edit the configuration file, the user may enter a command at the command line." The example may be preceded by identifying text, such as "Example 5.4.1," in order to inform a user of the documentation that he or she is reading the first example in the fourth section of the fifth chapter. Often, the first example in a section may be a complete, fully explained example, and subsequent examples may be less complete and use the context of previous examples, in order to save space in the documentation. By delineating the identifying text that precedes examples, the example can be placed in the context of a previous example. Therefore, the test processor is able to identify the proper context for the subsequent examples in a section or chapter, and communicate to the test processor what additional files are needed to create a test involving the subsequent examples. The example shown above may be delineated as:

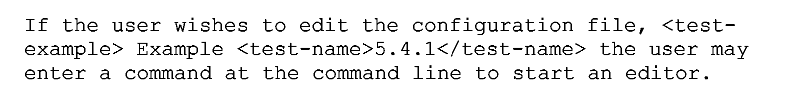

A subsequent example may be delineated as: 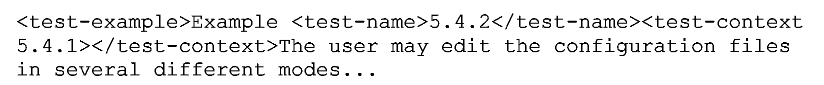 Thus, with respect to any additional files or steps needed in the creation of the test, the test processor may use the same context with examples 5.4.1 and 5.4.2.

The process of delineating identifying text as shown above may be implemented by a person such as a technical writer, or automatically, by a tool operating by a set of rules designed to search the documentation for instances of identifying text. Furthermore, delineating the example may be facilitated by using typographical conventions (e.g., font size, italics, bold, underlining, etc.) in order to distinguish between such items as the expected output response of a tool and the input into the tool from a user. The use of such typographical conventions may aid a technical writer in the placement of tags in the document.

Next, a determination is made as to whether one or more control statements are needed (Step 157). Control statements may be needed in order to allow the test processor to communicate with a selected tool or create other necessary interfaces. If control statements are needed, one or more control statements may be embedded as part of the embedded example (Step 158).

Next, a determination is made as to whether one or more additional file location statements are needed (Step 159). Additional file location statements may be needed in order to allow the test processor to locate additional files. If additional file location statements are needed, one or more additional file location statements may be embedded as part of the embedded example (Step 160).

The steps performed in Figure 6 are typically performed for each example in the documentation. Those skilled in the art will appreciate that, in accordance with one or more embodiments of the present invention, the number of steps may be fewer or greater, or the steps may occur in a different sequence than shown above. For example, the documentation may not include identifying text associated with examples.

In accordance with one or more embodiments of the present invention, shown below is an embedded example in documentation that has been prepared as described in Figure 6: 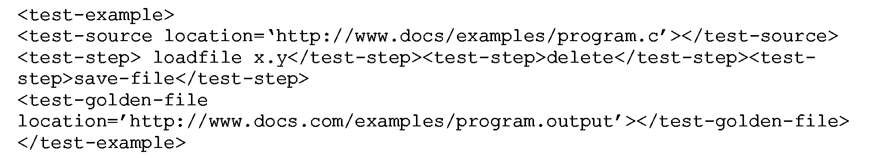 The embedded example begins with a start tag: "<test-example>." The word "test" refers to a test processor and serves to distinguish tags associated with the test processor from tags associated with other possible processors, such as a documentation processor or a documentation display device (*e.g.*, a web browser). Next, a command such as "<test-source location= 'http://www.docs/examples/program.c'></test-source>" serves to notify the test processor of the location of a source code file necessary to create a complete test from the embedded example for the tool. Next, three commands are delineated by a start tag and a closing tag, where each command represents some functionality of the tool that may be tested for proper operation: "<teststep> loadfile x.y</test-step><test-step>delete</test-step><test-step>savefile</test-step>." The tags "<test-step>" and "</test-step>" tell the test processor that "loadfile x.y," "delete," and "save-file" are each distinct steps in the example. Next, the command <test-golden-file location='http://www.docs.com/examples/program.output'></test-golden-file> notifies the test processor of the location of the file containing the proper tool response for the <test-step> commands in this example against which the tool output will be compared. Next, a closing tag "</test-example>" signifies the end of the embedded example. The result is an embedded example that may be used to generate a test of the test suite, which is used to determine whether the tool works properly with respect to the embedded example.

Advantages of the present invention include one or more of the following. The need for manual testing or manual generation of a test suite of examples in documentation is reduced, thereby enhancing tool quality, documentation quality, and software production efficiency. The construction of functionality is provided that detects differences between documentation of tool behavior and actual tool behavior, which leads to a reconciliation between documentation of tool behavior and actual tool behavior, thereby enhancing tool and/or documentation quality. The construction of functionality is provided that may automatically correct errors in embedded examples in documentation, thereby enhancing tool quality and documentation quality. The construction of functionality is provided that may automatically detect and locates the source of errors in a tool associated with embedded examples in documentation, thereby enhancing tool quality. A framework is provided for the coordination of groups working on quality control for documentation, thereby enhancing software quality and enhancing tool production efficiency, customer satisfaction, and reducing error reports related to the potential mismatches between documentation and actual tool behavior. A framework is provided for the automatic correction of errors in documentation and the embedding of tags in documentation, thereby improving documentation production efficiency. Those skilled in the art appreciate that the present invention may include other advantages and features.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method of testing an embedded example, comprising:
extracting the embedded example from documentation;
creating a test suite from the embedded example;
selecting a tool against which to execute the test suite;
executing the test suite against the tool to generate an output response; and
comparing the output response of the tool to a golden file.

2. The method of claim 1, further comprising:
creating the embedded example using at least one tag chosen from a tag set.

3. The method according to anyone of claims 1 or 2, further comprising:
creating the golden file using at least one tag chosen from a tag set.

4. The method according to anyone of claims 1 to 3, further comprising:
locating a source of error if the output response of the tool varies from the golden file.

5. The method according to anyone of claims 1 to 4, further comprising:
correcting the embedded example if the output response of the tool varies from the golden file.

6. The method according to anyone of claims 1 to 5, further comprising:
sending a comparison result to a display device.

7. The method according to anyone of claims 1 to 6, further comprising:
storing a comparison result onto a storage device.

8. The method of claim 1, wherein the test suite is created by interpreting a tag set.

9. The method of claim 1, wherein the tool is a command line tool.

10. The method of claim 1, wherein the golden file comprises a proper output response of the tool executing the test suite.

11. The method of claim 10, wherein the golden file is created manually.

12. A method of embedding tags, comprising:
locating an embedded example in documentation; and
delineating the embedded example with a start tag and a closing tag chosen from a tag set.

13. The method of claim 12, further comprising:
embedding a control statement as part of the embedded example.

14. The method according to anyone of claims 12 or 13, further comprising:
embedding a file location statement as part of the embedded example.

15. A method of creating a test suite, comprising:
examining an extracted example;
interpreting a tag located within the extracted example; and
aggregating constituent parts using the interpretation of the tag.

16. The method of claim 15, wherein the extracted example is an embedded example copied from documentation.

17. The method of claim 15, wherein the tag is interpreted using a defined tag set.

18. The method of claim 15, wherein the constituent parts are derived from the extracted example and a source file.

19. A computer system to test an embedded example, comprising:
a processor;
a memory;
a storage device;
a computer display; and
software instructions stored in the memory for enabling the computer system under control of the processor, to perform:
extracting the embedded example from documentation;
creating a test suite from the embedded example;
selecting a tool against which to execute the test suite;
executing the test suite against the tool to generate an output response; and
comparing the output response of the tool to a golden file.

20. The computer system of claim 19, further comprising:
software instructions for creating the embedded example using at least one tag chosen from a tag set.

21. The computer system according to anyone of claims 19 or 20, further comprising:
software instructions for creating the golden file using at least one tag chosen from a tag set.

22. The computer system according to anyone of claims 19 to 21, further comprising:
software instructions for locating a source of error if the output response of the tool varies from the golden file.

23. The computer system according to anyone of claims 19 to 22, further comprising:
software instructions for correcting the embedded example if the output response of the tool varies from the golden file.

24. The computer system according to anyone of claims 19 to 23, further comprising:
software instructions for sending a comparison result to a display device.

25. The computer system according to anyone of claims 19 to 24, further comprising:
software instructions for storing a comparison result onto a storage device.

26. The computer system of claim 19, wherein the golden file comprises a proper output response of the tool executing the test suite.

27. The computer system of claim 19, wherein the golden file is created manually.

28. An apparatus for testing an embedded example, comprising:
means for extracting the embedded example from documentation;
means for creating a test suite from the embedded example;
means for selecting a tool against which to execute the test suite;
means for executing the test suite against the tool to generate an output response; and
means for comparing the output response of the tool to a golden file.
